# EUROPÄISCHE PATENTSCHRIFT

(11) **EP 2 129 902 B1**
(45) Veröffentlichungstag und Bekanntmachung des Hinweises auf die Patenterteilung: **02.11.2016**
(21) Anmeldenummer: 08735733.1
(22) Anmeldetag: 03.04.2008
(51) Int. Cl.: F02M 37/22

(54) **FLÜSSIGKEITSFILTER**
LIQUID FILTER
FILTRE POUR LIQUIDES

(30) Priorität: 03.04.2007 DE 202007005024 U
(43) Veröffentlichungstag der Anmeldung: 09.12.2009
(73) Patentinhaber: Mann + Hummel GmbH, 71638 Ludwigsburg (DE)
(72) Erfinder: SCHIRRA, Andreas, 69181 Leimen (DE); THALMANN, Christian, 67346 Speyer (DE); CROISSANT, Horst, 76879 Hochstadt (DE)
(86) Internationale Anmeldenummer: PCT/EP2008/053984
(87) Internationale Veröffentlichungsnummer: WO 2008/119829

(56) Entgegenhaltungen:
- EP-A- 0 870 921
- EP-A- 1 136 110
- EP-A- 1 671 690
- DE-U1-202004 008 253
- US-A- 5 695 168

## Beschreibung

### Technisches Gebiet

Die Erfindung betrifft einen Flüssigkeitsfilter, insbesondere eines Kraftfahrzeuges oder einer Brennkraftmaschine, sowie ein Wechselfilterelement und Verfahren zu dessen Montage.

### Stand der Technik

Es ist bekannt, insbesondere für die Filtrierung von Schmieröl einer Brennkraftmaschine oder von Kraftstoff, ein Wechselfilterelement zu verwenden, bei dem ein Filtereinsatz in einem geschlossenen Gehäuse angeordnet ist. Das Gehäuse ist topfförmig ausgestaltet und weist einen Deckel auf, der mit Öffnungen zum Zuführen des zu reinigenden Öls und Öffnungen zum Ableiten des gereinigten Öls ausgestattet ist. Beim An- oder Abschrauben eines solchen so genannten Spin-On Filters an einen Filterkopf besteht die Gefahr, dass Öl oder Flüssigkeit aus offenen Leitungen ausläuft.

Aus der US 5 695 168 A ist ein Filter mit einer radial wirkenden Dichtung und einer automatischen Ventileinheit bekannt. Aus der EP 870 921 A2 ist ein Filterarrangement mit einem Filterkörper und einem Filterkopf bekannt, wobei der Filterkörper lateral in den Filterkopf einschiebbar ist. Beide haben vergleichsweise große Bauraumanforderungen.

Der Erfindung liegt die Aufgabe zugrunde, einen Flüssigkeitsfilter anzugeben, bei dem die vorgenannten Nachteile zuverlässig vermieden sind.

Diese Aufgabe wird durch einen Flüssigkeitsfilter mit den Merkmalen des Anspruchs 1, einem Verfahren nach Anspruch 9 und einem Wechselfiltereinsatz nach Anspruch 10 gelöst.

### Offenbarung der Erfindung

Es wird ein Flüssigkeitsfilter insbesondere eines Kraftfahrzeuges vorgeschlagen, der einen Filterkopf und ein zum Anschrauben an den Filterkopf vorgesehenes Wechsetfilterelement umfasst, wobei der Filterkopf einen mittigen Flüssigkeitsauslauf mit einem ersten Sperrventil und einen radial äußeren Flüssigkeitseinlass mit einem zweiten Sperrventil aufweist, wobei das Wechselfilterelement einen Gehäusetopf, einen Dichtungshalter mit mindestens einer Zulauföffnung und mit mindestens einer Ablauföffnung sowie einen im Gehäusetopf angeordneten Filtereinsatz insbesondere aus zickzackförmig gefaltetem Filterpapier aufweist, wobei das Wechselfilterelement einen mittigen Dorn zur Betätigung des ersten Sperrventils aufweist, und wobei im Dichtungshalter des Wechselfilterelementes ein umlaufender Ringwulst zur Betätigung des zweiten Sperrventils ausgeformt ist.

Das Wechselfilterelement weist auf einer dem Filterkopf zugewandten Stirnseite eine umlaufende Axialdichtung auf, wobei die Axialdichtung eine Dichtebene aufspannt, in der sie im montierten Zustand an einer Dichtfläche des Filterkopfes anliegt, und wobei eine Kontaktfläche des Ringwulstes zur Betätigung des zweiten Sperrventils zumindest näherungsweise in der Dichtebene liegt. Hierdurch wird erreicht, dass die Interaktion zwischen der Kontaktfläche des Ringwulstes und dem zweiten Sperrventil zumindest näherungsweise in der Dichtebene liegt. Durch das Fehlen eines erheblichen axialen Versatzes zwischen beiden Komponenten kann sowohl beim Wechselfilterelement als auch beim Filterkopf eine geringe Bauhöhe erzielt werden, die in den beengten räumlichen Verhältnissen eines Kraftfahrzeuges die Möglichkeiten der Positionierung des Flüssigkeitsfilters erweitert und Wartungsarbeiten am Flüssigkeitsfilter erleichtert.

Der axiale Abstand der Kontaktfläche zur Dichtebene ist erfindungsgemäß ≤ einer axialen Bauhöhe der Axialdichtung. Neben den vorgenannten Vorteilen der axialen Bauhöhenreduzierung wird zusätzlich erreicht, dass beim Auf- und Abschrauben des Wechselfilterelementes die Betätigung der Sperrventile zumindest näherungsweise zeitgleich mit dem Herstellen bzw. Aufheben der Dichtwirkung des Dichtringes eintritt. Das zweite Sperrventil ist nur dann geöffnet, wenn auch die Axialdichtung an der Dichtfläche anliegt, so dass ein unerwünschter Flüssigkeitsaustritt zuverlässig vermieden Ist.

Durch die erfindungsgemäße Ausgestaltung wird erreicht, dass das Wechselfilterelement beim Anschrauben an den Filterkopf sowohl das erste Sperrventil des Flüssigkeitsauslaufes mittels des Dornes, als auch das zweite Sperrventil des Flüssigkeitseinlasses mittels des umlaufenden Ringwulstes öffnend betätigt. Die beiden Sperrventile geben den Flüssigkeitsauslauf und den Flüssigkeitseinlass frei, so dass der Flüssigkeitsfilter seine vorgesehene Funktion ausüben kann. Beim Abschrauben des Wechselfilterelementes schließen die beiden Sperrventile, so dass weder Flüssigkeit aus dem Flüssigkeitseinlass noch aus dem Flüssigkeitsauslauf des Filterkopfes austreten kann. Für eine einwandfreie Funktion können nur solche Wechselfilter eingesetzt werden, deren Dorn und Ringwulst geometrisch auf die Lage der beiden Sperrventile abgestimmt sind. Der Einsatz von Fremdfiltern mit unter Umständen unzureichender Filtrierleistung ist vermieden. Die Ausformung des umlaufenden Ringwulstes am Dichtungshalter des Wechselfilterelementes erlaubt den Einsatz von standardisierten Filtereinsätzen, die nicht eigens an die erfindungsgemäße Ausgestaltung des Dichtungshalters angepasst werden müssen. Außerdem kann eine flache Bauform des Wechselfilterelementes mit geringer axialer Erstreckung ebenso wie eine raumsparende Bauform des Filterkopfes realisiert werden.

In bevorzugter Weiterbildung ist der Dichtungshalter als insbesondere dünnwandiges Blechteil ausgebildet, in welches eine umlaufende Sicke zur Bildung des Ringwulstes eingeprägt ist. Durch die Anordnung des Ringwulstes am Dichtungshalter des Wechselfilterelementes ist nur eine geringe axiale Erhebung der Sicke erforderlich. Dementsprechend kann die Sicke mit einem mäßigen Umformungsgrad in das Blechteil eingeprägt werden. Gleichzeitig erzeugt die Sicke eine Aussteifungswirkung, so dass das Blechteil zur Bildung des Dichtungshalters in material-, gewichts- und kostensparender Weise dünnwandig ausgeführt werden kann.

In einer bevorzugten Ausführungsform ist der Dichtungshalter auf der Innenseite des Wechselfilterelementes mittels einer Stützplatte abgestützt. Bedarfsweise kann hierdurch eine zusätzliche Aussteifung des dünnen Dichtungshalters derart herbeigeführt werden, dass der umlaufende Ringwulst beim Öffnen des zweiten Sperrventils nicht übermäßig nachgibt.

In bevorzugter Weiterbildung ist der Dom mittig in der Ablauföffnung mittels Stegen gehalten. Hierzu sind zweckmäßig mindestens drei sternförmig angeordnete Stege vorgesehen. Die Stege ermöglichen eine saubere Zentrierung des Doms mit hoher mechanischer Steifigkeit insbesondere hinsichtlich einer axialen Druckbelastung, so dass das erste, mittige Sperrventil zuverlässig geöffnet werden kann. Gleichzeitig erzeugen die Stege bauartbedingt bezüglich des durch die mittige Ablauföffnung hindurchtretenden Flüssigkeitsstromes nur einen geringen hydrodynamischen Widerstand.

In einer bevorzugten Ausführungsform weisen die Stege einen Befestigungsrand auf, mittels dessen die Baueinheit aus dem Dorn und den Stegen am Dichtungshalter befestigt ist. Wie auch beim weiter oben beschriebenen Ringwulst erfolgt hier die Betätigung des ersten Sperrventiles durch den Dichtungshalter des Wechselfilterelementes mit dem daran gehaltenen Dorn. Auf eine angepasste Ausgestaltung des Filtereinsatzes kann verzichtet werden. Alternativ kann es zweckmäßig sein, die Baueinheit aus dem Dorn und den Stegen an einer filterkopfseitigen Endscheibe des Filtereinsatzes zu befestigen und insbesondere einteilig daran anzuformen. Hierdurch kann in kostensparender Weise die Anzahl der zu fertigenden und zu montierenden Einzelteile reduziert werden.

In bevorzugter Weiterbildung sind der Dichtungshalter und der Gehäusetopf zur Bildung eines zum Austausch als Gesamtheit vorgesehenen Wechselfilterelementes unlösbar miteinander verbunden. Hierdurch wird erreicht, dass das Wechselfilterelement im praktischen Betrieb nur als Gesamtheit ausgetauscht und gegen ein Originalersatzteil ersetzt werden kann. Dies trägt zur dauerhaften Funktionssicherheit des Flüssigkeitsfilters bei.

Die Erfindung betrifft ferner ein Verfahren zur Montage eines Wechselfilterelements an einem Filterkopf zur Bildung des erfindungsgemäßen Flüssigkeitsfilters nach Anspruch 1, wobei das Wechselfilterelement derart an den Filterkopf angeschraubt wird, dass beim Anschrauben der mittige Dorn das erste Sperrventils betätigt und der umlaufende Ringwulst das zweite Sperrventil betätigt.

Die Erfindung betrifft ferner ein Wechselfilterelement zur Verwendung in einem erfindungsgemäßen Flüssigkeitsfilter nach Anspruch 1, wobei das Wechselfilterelement einen mittigen Dorn aufweist, der so ausgestaltet ist, dass damit ein erstes Sperrventil des Filterkopfs betätigbar ist, und wobei im Dichtungshalter des Wechselfilterelementes ein umlaufender Ringwulst so ausgeformt Ist, dass damit ein zweites Sperrventil des Filterkopfs betätigbar ist, wobei das Wechselfilterelement auf einer dem Filterkopf zuzuwendenden Stirnseite eine umlaufende Axialdichtung aufweist, wobei die Axialdichtung eine Dichtebene aufspannt, in der sie im montierten Zustand an einer Dichtfläche des Filterkopfes anlegbar ist.

### Kurze Beschreibung der Zeichnungen

Ausführungsbeispiele der Erfindung sind nachfolgend anhand der Zeichnung näher beschrieben. Es zeigen:

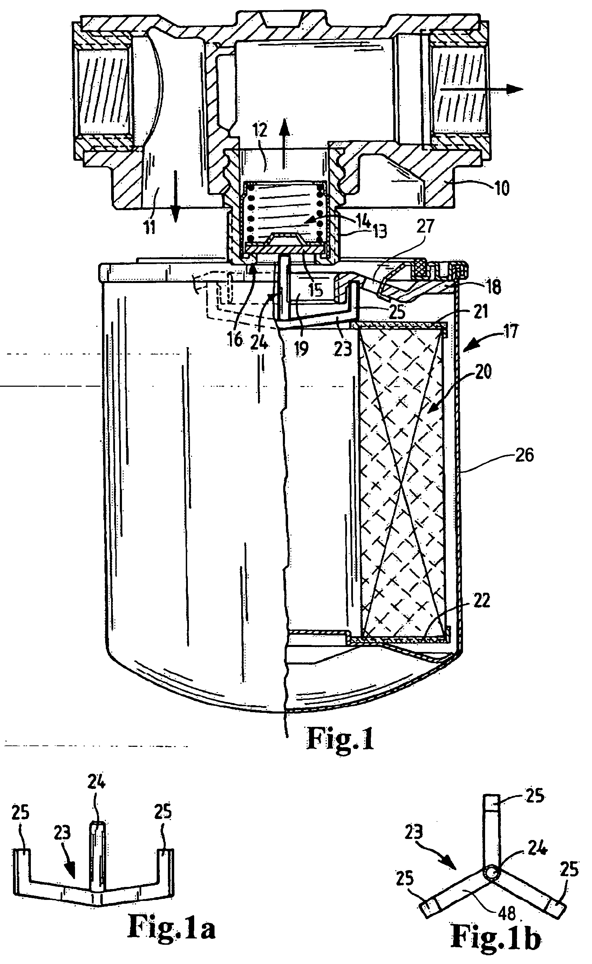

Fig. 1 in Längsschnittdarstellung einen Flüssigkeitsfilter am Beispiel eines Ölfilters mit einem Sperrventil und mit einem am Wechselfilterelement angeordneten Dorn zur Betätigung des Sperrventils;
Fig. 1 a eine seitliche Detailansicht des Domes nach Fig. 1 mit Stegelementen und mit einem Befestigungsrand zur Befestigung am Dichtungshalter des Wechselfilterelementes nach Fig. 1;
Fig. 1b in einer Draufsicht die Anordnung nach Fig. 1a mit Einzelheiten zur sternförmigen Anordnung der Stegelemente;
Fig. 2 in Längsschnittdarstellung einen erfindungsgemäßen Flüssigkeitsfilter am Beispiel eines Kraftfahrzeug-Kraftstofffilters mit einem mittigen ersten Sperrventil und einem radial äußeren zweiten Sperrventil, wobei das Wechselfilterelement einen umlaufenden Ringwulst zur Betätigung des zweiten Sperrventils aufweist;
Fig. 3 eine vergrößerte Detaildarstellung des Flüssigkeitsfilters nach Fig. 2 mit Einzelheiten zur Ausgestaltung des ersten Sperrventils und des mittigen Dorns;
Fig. 4 eine weiter vergrößerte Detailansicht der Anordnung nach Fig. 3 mit Einzelheiten des als dünnwandigen Blechteils ausgebildeten Dichtungshalters, in dem eine umlaufende Sicke zur Bildung des Ringwulstes eingeprägt ist.

### Ausführungsform(en) der Erfindung

Die Fig. 1 zeigt einen Flüssigkeitsfilter, der hier als Ölfilter einer Kraftfahrzeug-Brennkraftmaschine ausgebildet ist, und der einen Filterkopf 10 sowie ein Wechselfilterelement 17 umfasst. Der Filterkopf 10 ist mit einem Flüssigkeitseinlass 11 und einem Flüssigkeitsauslauf 12 versehen. An dem Filterkopf 10 ist ein Gewinde 13 zum Anschrauben des als sog. Spin-On ausgeführten Wechselfilterelementes 17 vorgesehen. Innerhalb des Flüssigkeitsauslaufes 12 befindet sich ein Sperrventil 14 mit einer Ventilplatte 15, die auf einem Ventilsitz 16 aufliegt und den Flüssigkeitsauslauf 12 verschließt. Das Wechselfilterelement 17 umfasst einen Gehäusetopf 26, der mit einem Dichtungshalter 18 versehen ist. An dem Dichtungshalter 18 befinden sich Zulauföffnungen 27 und eine mittige Ablauföffnung 19 für das gereinigte Öl. Innerhalb des Gehäusetopfes 26 befindet sich ein Filtereinsatz 20, Insbesondere bestehend aus einem zickzackförmig gefalteten Filterpapier mit Endscheiben 21, 22. Im Bereich der Ablauföffnung 19 ist ein Stegelement 23 angeordnet. Dieses Stegelement 23 ist auch in den Fig. 1a, 1b als Einzelelement sichtbar. Dieses Stegelement 23 weist einen Dom 24 mit Stegen 48 auf. In der Draufsicht nach Fig. 1b ist zu erkennen, dass der Dorn zentrisch angeordnet ist und die einzelnen Stege 48 - in diesem Fall drei Stege 48 - sich sternförmig bis zu einem Befestigungsrand 25, der in Fig. 1 zu erkennen ist, erstrecken. Das Stegelement 23 mit dem Dorn 24 und den Stegen 48 ist mittels des Befestigungsrandes 25 am Dichtungshalter 18 derart befestigt, dass der Dorn 24 mittig in der Ablauföffnung 19 mittels der Stege 48 gehalten ist. Im übrigen ist das Stegelement 23 in axialer Richtung zum Filtereinsatz 20 hin durch dessen Endscheibe 21 abgestützt. Der Filtereinsatz 20 weist diesbezüglich keine besondere Ausgestaltung auf und kann ein auch für andere Anwendungsfälle vorgesehenes Standardprodukt sein.

In bevorzugter Weise besteht das Stegelement 23 aus einem Kunststoffmaterial und wird bei der Montage in den Spin-On mit eingearbeitet. Der Dorn 24 wirdwie In Fig.1 erkennbar - beim Aufschrauben des Spin-On an den Filterkopf 10 die Ventilplatte 15 anheben und damit den Flüssigkeitsweg zum Flüssigkeitsauslauf 12 freigeben.

Das im Filterkopf 10 angeordnete selbstschließende Sperrventil 14 dient der Vermeidung von eindringendem Schmutz in den Filterkopf 10 beim Filterwechsel, da beim Abschrauben des Spin-On der Flüssigkeitsauslauf 12 des Filterkopfes 10 automatisch verschlossen wird. Ferner wird beim Filterwechsel das Nachtropfen der zu filtrierenden Flüssigkeit auf der Reinseite vermieden.

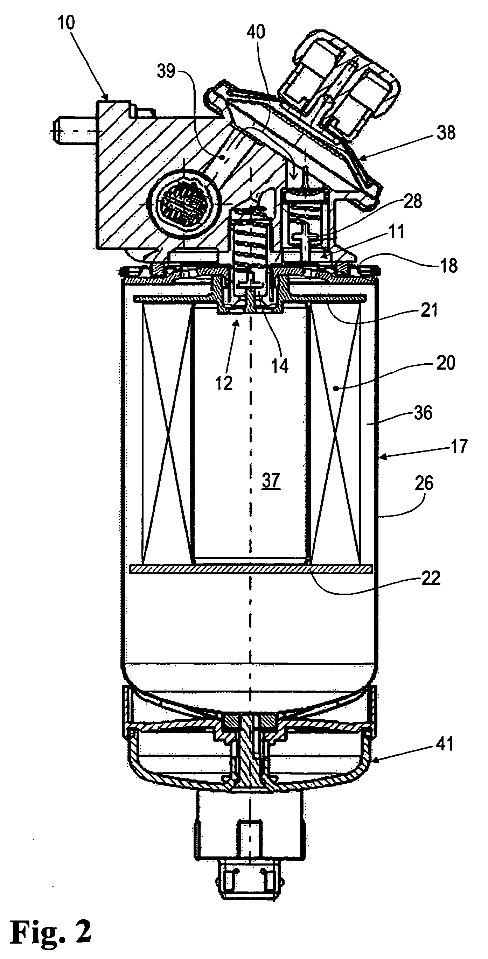

Fig. 2 zeigt in Längsschnittdarstellung einen erfindungsgemäßen Flüssigkeitsfilter am Beispiel eines Kraftfahrzeug-Kraftstofffilters, der - sofern nachfolgend nicht abweichend beschrieben - in seinen Merkmalen und Bezugszeichen mit dem Flüssigkeitsfilter nach den Fig. 1, 1a und 1b übereinstammt. Der Flüssigkeitsfilter umfasst einen fahrzeugfesten Filterkopf 10, an dem ein Wechselfilterelement 17 lösbar angeschraubt ist. Das Wechselfilterelement 17 kann um seine Längsachse gedreht und dabei vom Filterkopf 10 abgeschraubt und in den vorgesehenen Wartungsintervallen gegen ein neues, gleichartiges Wechselfilterelement 17 ersetzt werden. Im Filterkopf 10 ist ein Zulaufkanal 39 mit einer Handpumpe 38 angeordnet, wobei der Zulaufkanal 39 über einen Flüssigkeitseinlass 11 in den Innenraum des Wechselfilterelementes 17 mündet. Im Betrieb fließt dabei Kraftstoff entsprechend einem Pfeil 40 durch den Zulaufkanal 39 und den Flüssigkeitseinlass 11 in den Innenraum des Wechselfilterelementes 17. Beim Einsatz eines neuen Wechselfilterelementes 17 kann dieses mittels der Handpumpe 38 entsprechend dem Pfeil 40 geflutet werden.

Das Wechselfilterelement 17 umfasst ein Gehäuse, welches durch einen Gehäusetopf 26 mit einem Dichtungshalter 18 gebildet ist. Im Inneren des Gehäuses ist ein Filtereinsatz 20 mit Endscheiben 21, 22 angeordnet. Außenseitig des Filtereinsatzes 20 befindet sich eine Rohseite 36, während radial innenseitig sich eine Reinseite 37 des Fitlereinsatzes 20 befindet. Im Betrieb durchströmt das zu filtrierende Medium den Filtereinsatz 20 radial von der äußeren Rohseite 36 zur inneren Reinseite 37. Von dort tritt es aus dem Wechselfilterelement 17 über einen Flüssigkeitsauslauf 12 des Filterkopfes 10 aus und wird von dort im gereinigten Zustand zum Einsatzort geleitet.

An dem vom Fitlerkopf 10 abgewandten axialen Ende des Wechselfilterelementes 17 ist noch ein Wasserabscheider 41 angeordnet, mittels dessen ein unerwünschter Wasseranteil der zu filtrierenden Flüssigkeit auf der Rohseite 36 abgeschieden werden kann.

Der Filterkopf 10 weist in seinem mittigen Flüssigkeitsauslauf 12 ein erstes Sperrventil 14 und in seinem radial äußeren Flüssigkeitseinlass 11 ein zweites Sperrventil 28 auf, deren Ausgestaltung und Funktion nachfolgend näher beschrieben werden:

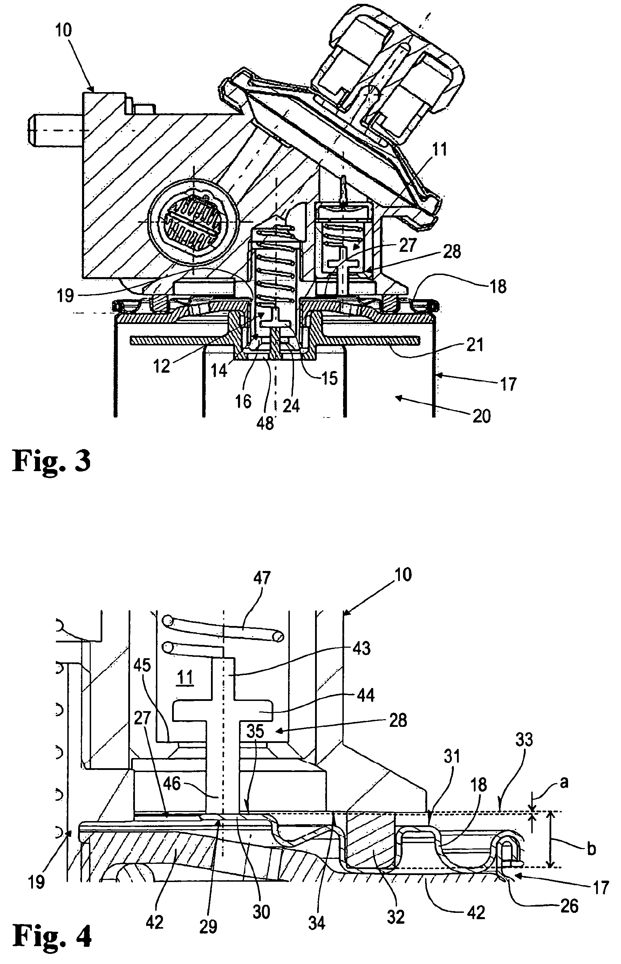

Fig. 3 zeigt eine vergrößerte Detaildarstellung des Flüssigkeitsfilters nach Fig. 2. Im Dichtungshalter 18 sind eine mittige Ablauföffnung 19 und mindestens eine, hier mehrere gleichmäßig über den Umfang verteilte Zulauföffnungen 27 angebracht. Bei geöffnetem zweiten Sperrventil 28 kann der Flüssigkeitsstrom durch den Flüssigkeitseinlass 11 ins Innere des Wechselfilterelementes 17 eintreten und nach Filtrierung bei geöffnetem ersten Sperrventil 14 durch die Ablauföffnung 19 wieder austreten. Einzelheiten der Zulauföffnung 27 und der Ablauföffnung 19 sind vergrößert In Fig. 4 dargestellt.

Wie auch beim Ausführungsbeispiel nach Fig. 1 umfasst das erste Sperrventil 14, welches im Flüssigkeitsauslauf 12 des Filterkopfes 10 angeordnet ist, eine Ventilplatte 15, die mittels einer Schraubendruckfeder gegen einen Ventilsitz 16 vorgespannt Ist. Das Wechselfilterelement 17 ist mit einem radial mittigen, axial ausgerichteten Dorn 24 versehen, der in Übereinstimmung mit der Darstellung nach Fig. 1b durch radiale Stege 48 gehalten ist. Abweichend vom Ausführungsbeispiel nach Fig. 1 ist die Baueinheit aus dem Dorn 24 und den Stegen 48 jedoch nicht am Dichtungshalter 18 des Wechselfilterelementes 17, sondern an der filterkopfseitigen Endscheibe 21 befestigt. Im gezeigten Ausführungsbeispiel ist die vorgenannte Baueinheit einteilig mit der Endscheibe 21 aus Kunststoff ausgeformt.

Fig. 4 zeigt in weiter vergrößerter Teilansicht die Anordnung nach Fig. 3 mit Einzelheiten des dort dargestellten zweiten Sperrventils 28 im Wechselspiel mit dem Dichtungshalter 18 des Wechselfilterelementes 17. Das zweite Sperrventil 28 umfasst einen Ventilkörper 43, der mit einer einteilig angeformten Ventilplatte 44 mittels einer Druckfeder 47 gegen einen Ventilsitz 45 des Filterkopfes 10 vorgespannt ist. Zum Wechselfilterelement 17 hin weist der Ventilkörper 43 einen axial hervorstehenden Stift 46 auf, der zur Betätigung des Ventilkörpers 43 vorgesehen ist, und dessen freies Ende abhängig vom axialen Verschiebeweg des Ventilkörpers 43 zumindest näherungsweise in einer Dichtebene 33 des Filterkopfes 10 liegt.

Das Wechselfilterelement 17 weist auf seiner dem Filterkopf 10 zugewandten Stirnseite 31 eine umlaufende Axialdichtung 32 mit einer axialen Bauhöhe b auf. Die Axialdichtung 32 spannt auf ihrer den Filterkopf 10 zugewandten Seite eine Dichtebene 33 auf, die senkrecht zur Längsachse des Wechselfilterelementes 17 liegt. Im montierten Zustand des Wechselfilterelementes 17 liegt die Axialdichtung 32 in ihrer Dichtebene 33 dichtend an der Dichtfläche 34 des Filterkopfes 10 an, wobei die Dichtfläche 34 ebenfalls senkrecht zur vorgenannten Längsachse liegt.

Im Dichtungshalter 18 des Wechselfilterelementes 17 ist ein um die Längsachse koaxial umlaufender Ringwulst 29 ausgeformt, der zur Betätigung des Ventilkörpers 43 des zweiten Sperrventils 28 vorgesehen ist. Der Ringwulst 29 kann durch eine entsprechende Aufdickung des beispielsweise aus Kunststoff spritzgegossenen Dichtungshalters 18 ausgebildet sein. Im gezeigten Ausführungsbeispiel ist der Dichtungshalter 18 als insbesondere dünnwandiges Blechteil ausgebildet, in welches eine umlaufende Sicke 30 zur Bildung des Ringwulstes 29 eingeprägt ist. Der Ringwulst 29 weist auf der axial dem Filterkopf 10 zugewandten Außenseite eine Kontaktfläche 35 auf, auf der das freie Ende des Stiftes 46 vom Ventilkörper 43 aufliegt. Beim Aufschrauben des Wechselfilterelements 17 gleitet die umlaufende Kontaktfläche 35 infolge ihrer Umfangsbewegung auf dem freien Ende des Stiftes 46, während der Stift 46 infolge der axialen Anzugsbewegung des Wechselfilterelementes 17 derart angehoben wird, dass die Ventilplatte 44 entsprechend der Darstellung nach Fig. 4 vom Ventilsitz 45 gegen die Vorspannkraft der Druckfeder 47 abgehoben wird. Umgekehrt führt ein Abschrauben des Wechselfilterelementes 17 infolge der axialen, entgegengesetzten Hubbewegung dazu, dass sich die Ventilplatte 44 unter Einwirkung der Druckfeder 47 auf den Ventilsitz 45 dichtend auflegen kann, wodurch das zweite Sperrventil 28 geschlossen ist.

Der Darstellung nach Fig. 4 kann entnommen werden, dass die Kontaktfläche 35 des Ringwulstes 29 zumindest näherungsweise in der Dichtebene 33 liegt. Zumindest näherungsweise bedeutet hier, dass ein kleiner axialer Abstand a der Kontaktfläche 35 zur Dichtebene 33 vorgesehen sein kann, der bevorzugt ≤ der axialen Bauhöhe b der Axialdichtung 32 ist. Hierdurch wird erreicht, dass der Ventilkörper 43 nicht übermäßig über der Dichtebene 33 hervorsteht oder in Gegenrichtung axial zurückversetzt ist, wodurch sich eine kompakte axiale Bauform des Filterkopfes 10 ergibt. Auch die Kontaktfläche des Ringwulstes 29 liegt zumindest näherungsweise in der Dichtebene 33 der Axialdichtung 32, infolge dessen durch den Ringwulst 29 kein zusätzlicher axialer Bauraum erforderlich ist.

Aus der Darstellung nach Fig. 4 ergibt sich des weiteren, dass der Dichtungshalter 18 und der Gehäusetopf 26 im Ausführungsbeispiel nach den Fig. 2 bis 4 ebenso wie beim Ausführungsbeispiel nach Fig. 1 unlösbar durch eine Umbördelung miteinander verbunden sind. Hierdurch ist ein zum Austausch als Gesamtheit vorgesehenes Wechselfilterelement 17 gebildet, dessen Filtereinsatz 20 (Fig. 2) nicht zum Einzelaustausch vorgesehen ist. Auch ergibt sich aus Fig. 4 unter gemeinsamen Bezug auf die Fig. 2 und 3, dass der Dichtungshalter 18 optional auf der Innenseite des Wechselfilterelementes 17 mittels einer Im Vergleich zur Dicke des Dichtungshalters 18 mehrfach dickeren, insbesondere aus Metall gefertigten Deckels 42 abgestützt ist.

## Patentansprüche

1. Flüssigkeitsfilter insbesondere eines Kraftfahrzeuges, umfassend einen Filterkopf (10) und ein zum Anschrauben an den Filterkopf (10) vorgesehenes Wechselfilterelement (17), wobei der Filterkopf (10) einen mittigen Flüssigkeitsauslauf (12) mit einem ersten Sperrventil (14) und einen radial äußeren Flüssigkeitseinlass (11) mit einem zweiten Sperrventil (28) aufweist, wobei das Wechselfilterelement (17) einen Gehäusetopf (26), einen Dichtungshalter (18) mit mindestens einer Zulauföffnung (27) und mindestens einer Ablauföffnung (19) sowie einen im Gehäusetopf (26) angeordneten Filtereinsatz (20) insbesondere aus zickzackförmig gefaltetem Filterpapier aufweist, wobei das Wechselfilterelement (17) einen mittigen Dorn (24) zur Betätigung des ersten Sperrventils (14) aufweist, und wobei im Dichtungshalter (18) des Wechselfilterelementes (17) ein umlaufender Ringwulst (29) zur Betätigung des zweiten Sperrventils (28) ausgeformt ist, **dadurch gekennzeichnet, dass** das Wechselfilterelement (17) auf einer dem Filterkopf (10) zugewandten Stirnseite (31) eine umlaufende Axialdichtung (32) aufweist, wobei die Axialdichtung (32) eine Dichtebene (33) aufspannt, in der sie im montierten Zustand an einer Dichtfläche (34) des Filterkopfes (10) anliegt, und wobei eine Kontaktfläche (35) des Ringwulstes (29) zur Betätigung des zweiten Sperrventils (28) derart näherungsweise in der Dichtebene (33) liegt, dass ein axialer Abstand (a) der Kontaktfläche (35) zur Dichtebene (33) ≤eine axiale Bauhöhe (b) der Axialdichtung (32) ist.

2. Flüssigkeitsfilter nach Anspruch 1, **dadurch gekennzeichnet, dass** der Dichtungshalter (18) als insbesondere dünnwandiges Blechteil ausgebildet ist, in welches eine umlaufende Sicke (30) zur Bildung des Ringwulstes (29) eingeprägt ist.

3. Flüssigkeitsfilter nach einem der Ansprüche 1 bis 2, **dadurch gekennzeichnet, dass** der Dichtungshalter (18) auf der Innenseite des Wechselfilterelementes (17) mittels eines Deckels (42) abgestützt ist.

4. Flüssigkeitsfilter nach einem der Ansprüche 1 bis 3, **dadurch gekennzeichnet, dass** der Dorn (24) mittig in der Ablauföffnung (19) mittels Stegen (48) gehalten ist.

5. Flüssigkeitsfilter nach Anspruch 4, **dadurch gekennzeichnet, dass** mindestens drei sternförmig angeordnete Stege (48) vorgesehen sind.

6. Flüssigkeitsfilter nach Anspruch 4 oder 5, **dadurch gekennzeichnet, dass** die Stege (48) einen Befestigungsrand (25) aufweisen, mittels dessen ein Stegelement (23), umfassend den Dorn (24) und die Stege (48), am Dichtungshalter (18) befestigt ist.

7. Flüssigkeitsfilter nach Anspruch 4 oder 5, **dadurch gekennzeichnet, dass** die Baueinheit aus dem Dorn (24) und den Stegen (48) an einer filterkopfseitigen Endscheibe (21) des Filtereinsatzes (20) befestigt und insbesondere einteilig daran angeformt ist.

8. Flüssigkeitsfilter nach einem der Ansprüche 1 bis 7, **dadurch gekennzeichnet, dass** der Dichtungshalter (18) und der Gehäusetopf (26) zur Bildung eines zum Austausch als Gesamtheit vorgesehenen Wechselfilterelementes (17) unlösbar miteinander verbunden sind.

9. Verfahren zur Montage eines Wechselfilterelements (17) an einen Filterkopf (10) zur Bildung eines Flüssigkeitsfilters nach einem der vorhergehenden Ansprüche, wobei der Filterkopf (10) einen mittigen Flüssigkeitsauslauf (12) mit einem ersten Sperrventil (14) und einen radial äußeren Flüssigkeitseinlass (11) mit einem zweiten Sperrventil (28) aufweist, wobei das Wechselfilterelement (17) einen Gehäusetopf (26), einen Dichtungshalter (18) mit mindestens einer Zulauföffnung (27) und mindestens einer Ablauföffnung (19) sowie einen im Gehäusetopf (26) angeordneten Filtereinsatz (20) insbesondere aus zickzackförmig gefaltetem Filterpapier aufweist, wobei das Wechselfilterelement (17) einen mittigen Dorn (24) zur Betätigung des ersten Sperrventils (14) aufweist, und wobei im Dichtungshalter (18) des Wechselfilterelementes (17) ein umlaufender Ringwulst (29) zur Betätigung des zweiten Sperrventils (28) ausgeformt ist, wobei das Wechselfilterelement (17) auf einer dem Filterkopf (10) zugewandten Stirnseite (31) eine umlaufende Axialdichtung (32) aufweist, wobei die Axialdichtung (32) eine Dichtebene (33) aufspannt, in der sie im montierten Zustand an einer Dichtfläche (34) des Filterkopfes (10) anliegt, und wobei eine Kontaktfläche (35) des Ringwulstes (29) zur Betätigung des zweiten Sperrventils (28) derart näherungsweise in der Dichtebene (33) liegt, dass ein axialer Abstand (a) der Kontaktfläche (35) zur Dichtebene (33) ≤ eine axiale Bauhöhe (b) der Axialdichtung (32) ist,
wobei das Wechselfilterelement (17) an den Filterkopf (10) angeschraubt wird, wobei beim Anschrauben der mittige Dorn (24) das erste Sperrventils (14) betätigt und der umlaufender Ringwulst (29) das zweite Sperrventil (28) betätigt.

10. Wechselfilterelement zur Verwendung in einem Flüssigkeitsfilter nach einem der Ansprüche 1-8, aufweisend einen Gehäusetopf (26), einen Dichtungshalter (18) mit mindestens einer Zulauföffnung (27) und mindestens einer Ablauföffnung (19) sowie einen im Gehäusetopf (26) angeordneten Filtereinsatz (20) insbesondere aus zickzackförmig gefaltetem Filterpapier, wobei das Wechselfilterelement (17) einen mittigen Dorn (24) aufweist, der so ausgestaltet ist, dass damit ein erstes Sperrventil (14) betätigbar ist, und wobei im Dichtungshalter (18) des Wechselfilterelementes (17) ein umlaufender Ringwulst (29) so ausgeformt ist, dass damit ein zweites Sperrventil (28) betätigbar ist, wobei das Wechselfilterelement (17) auf einer dem Filterkopf (10) zuzuwendenden Stirnseite (31) eine umlaufende Axialdichtung (32) aufweist, wobei die Axialdichtung (32) eine Dichtebene (33) aufspannt, in der sie im montierten Zustand an einer Dichtfläche (34) des Filterkopfes (10) anlegbar ist, und wobei eine Kontaktfläche (35) des Ringwulstes (29) zur Betätigung des zweiten Sperrventils (28) derart näherungsweise in der Dichtebene (33) liegt, dass ein axialer Abstand (a) der Kontaktfläche (35) zur Dichtebene (33) ≤ eine axiale Bauhöhe (b) der Axialdichtung (32) ist.

## Claims

1. Liquid filter in particular of a motor vehicle, comprising a filter head (10) and a spin-on filter element (17) provided for being screwed onto the filter head (10), wherein the filter head (10) features a central liquid outlet (12) with a first shut-off valve (14) and a radially outer liquid inlet (11) with a second shut-off valve (28), wherein the spin-on filter element (17) features a housing pot (26), a seal retainer (18) with at least one inlet opening (27) and at least one drain opening (19) as well as a filter insert (20) disposed in the housing pot (26) and made in particular of zigzag-folded filter paper, wherein the spin-on filter element (17) features a central mandrel (24) for actuating the first shut-off valve (14) and wherein in the seal retainer (18) of the spin-on filter element (17) a circumferential ring bead (29) for actuating the second shut-off valve (28) is formed, **characterized in that** the spin-on filter element (17) features a circumferential axial seal (32) on a front side (31) facing the filter head (10), wherein the axial seal (32) spans a sealing plane (33) in which it abuts on a sealing surface (34) of the filter head (10) in mounted state and wherein a contact surface (35) of the ring bead (29) for actuating the second shut-off valve (28) lies approximately in the sealing plane (33) in such a way that an axial distance (a) of the contact surface (35) to the sealing plane (33) is ≤ an axial overall height (b) of the axial seal (32).

2. Liquid filter according to claim 1, **characterized in that** the seal retainer (18) is designed as in particular thin-walled sheet metal part into which a circumferential bead (30) is embossed for forming the ring bead (29).

3. Liquid filter according to one of the claims 1 to 2, **characterized in that** the seal retainer (18) is supported by means of a cover (42) on the interior side of the spin-on filter element (17).

4. Liquid filter according to one of the claims 1 to 3, **characterized in that** the mandrel (24) is held centrally in the drain opening (19) by means of webs (48).

5. Liquid filter according to claim 4, **characterized in that** at least three webs (48) disposed in a star-shaped manner are provided.

6. Liquid filter according to claim 4 or 5, **characterized in that** the webs (48) feature a fastening edge (25) by means of which a web element (23), comprising the mandrel (24) and the webs (48), is attached to the seal retainer (18).

7. Liquid filter according to claim 4 or 5, **characterized in that** the structural unit consisting of the mandrel (24) and the webs (48) is attached at the filter-head-sided end disk (21) of the filter insert (20) and in particular integrally molded thereto in one piece.

8. Liquid filter according to one of the claims 1 to 7, **characterized in that** the seal retainer (18) and the housing pot (26) are undetachably connected to each other for forming a spin-on filter element (17) provided for being exchanged as a whole.

9. Method for mounting a spin-on filter element (17) to a filter head (10) for forming a liquid filter according to one of the above claims, wherein the filter head (10) features a central liquid outlet (12) with a first shut-off valve (14) and a radially outer liquid inlet (11) with a second shut-off valve (28), wherein the spin-on filter element (17) features a housing pot (26), a seal retainer (18) with at least one inlet opening (27) and at least one drain opening (19) as well as a filter insert (20) disposed in the housing pot (26) and made in particular of zigzag-folded filter paper, wherein the spin-on filter element (17) features a central mandrel (24) for actuating the first shut-off valve (14) and wherein a circumferential ring bead (29) for actuating the second shut-off valve (28) is formed in the seal retainer (18) of the spin-on filter element (17), wherein the spin-on filter element (17) features a circumferential axial seal (32) on a front side (31) facing the filter head (10), wherein the axial seal (32) spans a sealing plane (33) in which it abuts on a sealing surface (34) of the filter head (10) in mounted state and wherein a contact surface (35) of the ring bead (29) for actuating the second shut-off valve (28) lies approximately in the sealing plane (33) in such a way that an axial distance (a) of the contact surface (35) to the sealing plane (33) is ≤ an axial overall height (b) of the axial seal (32), wherein the spin-on filter element (17) is screwed to the filter head (10), wherein during screwing the central mandrel (24) actuates the first shut-off valve (14) and the circumferential ring bead (29) actuates the second shut-off valve (28).

10. Spin-on filter element for being used in a liquid filter according to one of the claims 1-8, featuring a housing pot (26), a seal retainer (18) with at least one inlet opening (27) and at least one drain opening (19) as well as a filter insert (20) disposed in the housing pot (26) and made in particular of zigzag-folded filter paper, wherein the spin-on filter element (17) features a central mandrel (24) which is designed in such a way that a first shut-off valve (14) is operable therewith, and wherein in the seal retainer (18) of the spin-on filter element (17) a circumferential ring bead (29) is designed in such a way that a second shut-off valve (28) is operable therewith, wherein the spin-on filter element (17) features a circumferential axial seal (32) on a front side (31) facing the filter head (10), wherein the axial seal (32) spans a sealing plane (33) in which it can abut on a sealing surface (34) of the filter head (10) in mounted state and wherein a contact surface (35) of the ring bead (29) for actuating the second shut-off valve (28) lies approximately in the sealing plane (33) in such a way that an axial distance (a) of the contact surface (35) to the sealing plane (33) is ≤ an axial overall height (b) of the axial seal (32).

## Revendications

1. Filtre à liquide, notamment d'un véhicule automobile, comprenant une tête de filtre (10) et un élément de filtre échangeable (17) à visser sur la tête de filtre (10), la tête de filtre (10) présentant une sortie de liquide (12) centrale avec une première vanne d'arrêt (14) et une entrée de liquide extérieure radiale (11) avec une deuxième vanne d'arrêt (28), l'élément de filtre échangeable (17) comportant un pot de boîtier (26), un porte-joint (18) avec au moins une ouverture d'entrée (27) et au moins une ouverture d'évacuation (19) ainsi qu'un insert de filtre (20) placé dans le pot de boîtier (26) et constitué en particulier d'un papier filtre plié en accordéon, l'élément de filtre échangeable (17) étant pourvu d'une broche (24) centrale servant à actionner la première vanne d'arrêt (14), et un bourrelet annulaire (29) servant à actionner la deuxième vanne d'arrêt (28) étant formé dans le porte-joint (18) de l'élément de filtre échangeable (17), **caractérisé en ce que** l'élément de filtre échangeable (17) présente un joint axial circulaire (32) sur une face frontale (31) dirigée vers la tête de filtre (10), le joint axial (32) constituant un plan d'étanchéité (33) dans lequel ce joint, en position montée, touche une surface d'étanchéité (34) de la tête de filtre (10), et une surface de contact (35) du bourrelet annulaire (29) servant à actionner la deuxième vanne d'arrêt (28) étant disposée quasiment dans le plan d'étanchéité (33) de sorte qu'une distance axiale (a) entre la surface de contact (35) et le plan d'étanchéité (33) soit ≤ à une hauteur axiale (b) du joint axial (32).

2. Filtre à liquide selon la revendication 1, **caractérisé en ce que le** porte-joint (18) est exécuté en tant qu'élément de tôle avec une paroi particulièrement fine, dans laquelle est emboutie une moulure (30) circulaire permettant de former le bourrelet annulaire (29).

3. Filtre à liquide selon l'une des revendications 1 à 2, **caractérisé en ce que** le porte-joint (18) est soutenu, sur la face intérieure de l'élément de filtre interchangeable (17), par un couvercle (42).

4. Filtre à liquide selon l'une des revendications 1 à 3, **caractérisé en ce que** la broche (24) est maintenue par des nervures (48) en position centrée dans l'ouverture d'évacuation (19).

5. Filtre à liquide selon la revendication 4, **caractérisé en ce qu**'au moins trois nervures (48) disposées en forme d'étoile sont prévues.

6. Filtre à liquide selon la revendication 4 ou 5, **caractérisé en ce que** les nervures (48) comportent un bord de fixation (25) au moyen duquel un élément de nervure (23), comprenant la broche (24) et les nervures (48), est fixé au porte-joint (18).

7. Filtre à liquide selon la revendication 4 ou 5, **caractérisé en ce que** l'unité composée de la broche (24) et des nervures (48) est fixée à un disque d'extrémité (21) situé du côté de la tête de filtre de l'insert de filtre (20) et est en particulier assemblée en un bloc avec ce disque.

8. Filtre à liquide selon l'une des revendications 1 à 7, **caractérisé en ce que** le porte-joint (18) et le pot de boîtier (26) sont reliés l'un à l'autre de manière inamovible en vue de former un élément de filtre échangeable (17) pouvant être échangé sous forme d'unité complète.

9. Procédé de montage d'un élément de filtre échangeable (17) sur une tête de filtre (10) pour former un filtre à liquide selon l'une des revendications précédentes, la tête de filtre (10) présentant une sortie de liquide (12) centrale avec une première vanne d'arrêt (14) et une entrée de liquide (11) extérieure radiale avec une deuxième vanne d'arrêt (28), l'élément de filtre échangeable (17) comportant un pot de boîtier (26), un porte-joint (18) avec au moins une ouverture d'entrée (27) et au moins une ouverture d'évacuation (19) ainsi qu'un insert de filtre (20) placé dans le pot de boîtier (26) et constitué en particulier d'un papier filtre plié en accordéon, l'élément de filtre échangeable (17) étant pourvu d'une broche (24) centrale servant à actionner la première vanne d'arrêt (14), et un bourrelet annulaire (29) servant à actionner la deuxième vanne d'arrêt (28) étant formé dans le porte-joint (18) de l'élément de filtre échangeable (17), l'élément de filtre échangeable (17) présentant un joint axial circulaire (32) sur une face frontale (31) dirigée vers la tête de filtre (10), le joint axial (32) constituant un plan d'étanchéité (33) dans lequel ce joint, en position montée, touche une surface d'étanchéité (34) de la tête de filtre (10), et une surface de contact (35) du bourrelet annulaire (29) servant à actionner la deuxième vanne d'arrêt (28) étant disposée quasiment dans le plan d'étanchéité (33) de sorte qu'une distance axiale (a) entre la surface de contact (35) et le plan d'étanchéité (33) soit ≤ à une hauteur axiale (b) du joint axial (32), l'élément de filtre échangeable (17) étant vissé à la tête de filtre (10), lors du vissage, la broche (24) centrale actionnant la première vanne d'arrêt (14) et le bourrelet annulaire (29) actionnant la deuxième vanne d'arrêt (28).

10. Élément de filtre échangeable destiné à être utilisé dans un filtre à liquide selon l'une des revendications 1 à 8, comportant un pot de boîtier (26), un porte-joint (18) avec au moins une ouverture d'entrée (27) et au moins une ouverture d'évacuation (19) ainsi qu'un insert de filtre (20) placé dans le pot de boîtier (26) et constitué en particulier d'un papier filtre plié en accordéon, l'élément de filtre échangeable (17) étant pourvu d'une broche (24) centrale conçue de telle manière qu'une première vanne d'arrêt (14) puisse être actionnée par cette broche, et un bourrelet annulaire (29) étant formé dans le porte-joint (18) de l'élément de filtre échangeable (17) de telle manière qu'une deuxième vanne d'arrêt (14) puisse être actionnée par ce bourrelet, l'élément de filtre échangeable (17) présentant un joint axial circulaire (32) sur une face frontale (31) dirigée vers la tête de filtre (10), le joint axial (32) constituant un plan d'étanchéité (33) dans lequel ce joint, en position montée, touche une surface d'étanchéité (34) de la tête de filtre (10), et une surface de contact (35) du bourrelet annulaire (29) servant à actionner la deuxième vanne d'arrêt (28) étant disposée quasiment dans le plan d'étanchéité (33) de sorte qu'une distance axiale (a) entre la surface de contact (35) et le plan d'étanchéité (33) soit ≤ à une hauteur axiale (b) du joint axial (32).
